**Europäisches Patentamt**

**European Patent Office**

**Office européen des brevets**

(19)

(11) Veröffentlichungsnummer: **0 250 898 B1**

(12) **EUROPÄISCHE PATENTSCHRIFT**

(45) Veröffentlichungstag der Patentschrift: **11.11.92**

(51) Int. Cl.⁵: **G11B 15/66**

(21) Anmeldenummer: **87107951.3**

(22) Anmeldetag: **02.06.87**

(54) **Spannvorrichtung für Magnetband-Wickelkerne.**

(30) Priorität: **12.06.86 DE 8615786 U**

(43) Veröffentlichungstag der Anmeldung:
**07.01.88 Patentblatt 88/01**

(45) Bekanntmachung des Hinweises auf die
Patenterteilung:
**11.11.92 Patentblatt 92/46**

(84) Benannte Vertragsstaaten:
**DE FR GB**

(56) Entgegenhaltungen:
**DE-U- 7 434 365**
**DE-U- 7 814 447**
**US-A- 2 713 462**
**US-A- 2 882 078**
**US-A- 3 857 526**

(73) Patentinhaber: **BASF Magnetics GmbH**
**Gottlieb-Daimler-Strasse 10**
**W-6800 Mannheim(DE)**

(72) Erfinder: **Birkmann, Josef**
**Senser-Berg-Strasse 66b**
**W-8080 Fürstenfeldbruck(DE)**
Erfinder: **Toral, José**
**Stiftsbogen 162**
**W-8000 München 70(DE)**

(74) Vertreter: **Münch, Volker et al**
**BASF Aktiengesellschaft Patentabteilung-C6**
**ZSP/A**
**W-6700 Ludwigshafen(DE)**

## Beschreibung

Die Erfindung betrifft einen Wickelkern und eine Spannvorrichtung nach dem Oberbegriff des Patentanspruchs.

Bei Trennmaschinen für Magnetbänder wird eine relativ breite Folienbahn in mehrere schmale Streifen getrennt und zu Rollen auf einzelne Wickelkerne aufgewickelt. Bei Kontaktwickelmaschinen sind auf einer Wickelwelle schwenkbare Wickelarme gelagert, die zur Aufnahme und Fixierung der Wickelkerne Spannvorrichtungen aufweisen, welche unterschiedliche Wirkungsweise haben können, beispielsweise durch magnetischen oder hydraulischen Andruck, durch Rastklinken oder durch eine einrastende Drehvorrichtung welche den Wickelkern auf einem Aufnahmekörper fixiert. Im letzteren Fall muß zum Lösen des Kerns die Aufnahmevorrichtung durch Zurückdrehung der Scheibe entriegelt werden.

Da die Bestückung der Trennmaschinen mit Wickelkernen, die von Hand erfolgt, während der Konfektionierung der Magnetbänder häufig anfällt, sind die erwähnten Aufnahmevorrichtungen mit einem nicht wünschenswerten Arbeits- und Zeitaufwand verbunden. Zur Verbindung von Wickelkernen mit der Aufnahmevorrichtung an Magnetbandgeräten hat man auch Kugeln, die in besonderen Bohrungen untergebracht sind, verwendet, wobei diese mit Hilfe eines Druckknopfes nach außen gedrückt werden. Zum Abheben der Kerne muß jedoch dauernd der Druckknopf mit einer zentrisch zur Drehachse angeordneten Handhabe niedergedrückt werden. Aus der DE-U-78 14 447 ist außerdem eine Spannvorrichtung für Wickelkerne mit federbelasteten Spannelementen bekannt. Diese ist jedoch auf spezielle Wickelkerne, nämlich sogenannte NAB-Kerne oder Wickelkerne nach DE-U-74 34 365, beschränkt, welche im wesentlichen die Form eines Kreisringes mit einer kreisförmigen inneren Bohrung besitzen.

Die Aufgabe der Erfindung bestand nun darin, eine Spanneinrichtung zu schaffen, die eine erleichterte Bestückung von Trennmaschinen sowie Umspulvorrichtungen mit Wickelkernen der eingangs genannten gattungsmäßigen Art schafft, welche in der DIN 45 515 genormt festgelegt sind sowie ein rasches Auswechseln solcher Wickelkerne ermöglicht.

Die Aufgabe wurde gelöst mit einem Wickelkern sowie einer Spannvorrichtung mit den im kennzeichnenden Teil des Anspruchs genannten Merkmalen.

Einzelheiten der Erfindung geben aus der Beschreibung und den Zeichnungen hervor.

Die Erfindung wird nun anhand von Zeichnungen näher erläutert. In diesen zeigen

Figur 1     eine Aufsicht auf die Spannvorrichtung

Figur 2     einen Querschnitt der Spannvorrichtung längs der Linie II von Figur 1 mit aufgestecktem Wickelkern.

Die Spannvorrichtung umfaßt einen auf einer Kreisscheibe (2) sitzenden Block (1) mit einer axialen Bohrung zur Aufnahme eines Lagers (3), wobei die gesamte Spannvorrichtung auf der Achse (4) drehbar gelagert ist. Die Umfangsflächen des Blockes (1) sind der inneren Bohrung des Wickelkerns (6) nach DIN 45 515 angepaßt, so daß der Wickelkern mit dem Block (1) eine formschlüssige Verbindung bildet. Die kreiszylindrisch geformten Seitenflächen (7) sowie die zentrale Fläche (8) des Blockes (1) können nach der Vorderkante hin konisch verjüngt sein, damit beim Aufsetzen des Wickelkerns ein Spielraum als eine Art Einführschräge existiert, so daß bei Verkanten des Wikkelkerns der Aufsetzvorgang nicht behindert wird.

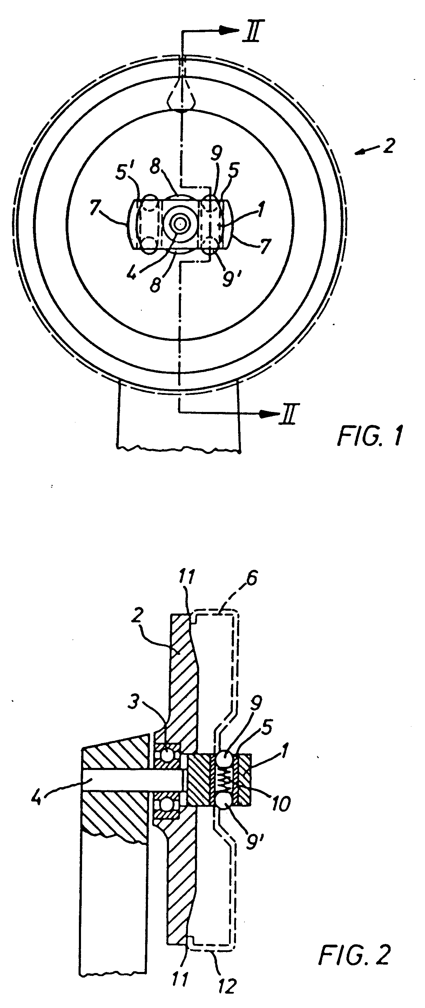

Die Spannvorrichtung selbst besteht aus zwei zylindrischen Buchsen (5, 5'), die beiderseits der Achse (4) senkrecht zur Längsseite in entsprechenden Bohrungen des Blockes' (1) verankert sind. Die Buchsen (5, 5') enthalten zwei Kugeln (9, 9'), welche durch eine Feder (10) an den äußeren Bund der jeweiligen Buchse (5) gedrückt werden. Die Buchsen (5, 5') sind in einem derartigen Abstand von der Kreisscheibe (2) angeordnet, daß sich die zentrale Bohrung des Wickelkerns (6) an der aus der Buchse (5) herausragenden Kugelkalotte abstützt und den Wickelkern (6) mit seinem umgebördelten Außenrand gegen den Anschlag (11) drückt, welcher durch den äußeren Umfang der Kreisscheibe (2) gegeben ist und wobei dieser äußere Umfang vorzugsweise, wie in Figur 2 dargestellt, eine geringere Dicke als der innere Teil der Kreisscheibe besitzt. Auf der Außenfläche (12) des Wickelkerns (6) wird der Magnetband-Wickel vorzugsweise flanschlos aufgewickelt.

## Patentansprüche

1.  Wickelkern (6) zum Bewickeln mit Magnetband mit einer zentralen Bohrung, deren Querschnitt die Gestalt eines Kreissegments mit zwei Kreissektor förmigen Ausbuchtungen hat sowie Spannvorrichtung zum Aufsetzen eines derartigen Wickelkerns zwecks Umspulen und Bewickeln, umfassend einen mit einer drehbar gelagerten Kreisscheibe (2) fest verbundenen Block (1), welcher mit der Bohrung des Wickelkerns eine formschlüssige Verbindung bildet und wobei der Block (1) als die Spannkraft liefernde Elemente in Senkbohrungen (5, 5') sitzende federunterstützte Kugeln (9, 9') enthält, dadurch gekennzeichnet, daß der Wickelkern (6) einen umgebördelten Außenrand besitzt und daß der axiale Abstand der Kugeln (9, 9') von der Kreisscheibe (2) so bemessen ist, daß der Außenrand des aufgesetzten Wickelkerns gegen den durch den äußeren Umfang der Kreisscheibe gegebenen Anschlag (11) gedrückt wird.

## Claims

1. A hub (6) for winding with magnetic tape having a central bore, the cross section of which has the shape of a circular segment with two circular sector-shaped bulges, as well as a fastening device for mounting such a hub for the purpose of rewinding and winding, comprising a block (1) which is firmly connected to a rotatably mounted circular disk (2) and forms a positive connection with the bore of the hub, and the block (1) containing spring-supported balls (9, 9'), seated in countersunk bores (5, 5'), as elements providing the fastening force, wherein the hub (6) has a flanged outer edge and wherein the axial distance of the balls (9, 9') from the circular disk (2) is dimensioned in such a way that the outer edge of the mounted hub is pressed against the stop (11) provided by the outer circumference of the circular disk.

## Revendications

1. Noyau (6) pour l'enroulement de bande magnétique, comportant un trou central dont la section a la forme d'un segment de cercle avec deux saillies en forme de secteur de cercle, et dispositif de serrage pour le montage d'un tel noyau pour bobinage et enroulement, comprenant un bloc (1) solidaire d'un disque monté tournant (2) et formant un assemblage à emboîtement avec le trou du noyau, ce bloc (1) contenant, comme éléments produisant la force de serrage, des billes (9, 9') montées dans des trous fraisés (5, 5') et supportées par des ressorts, caractérisé par le fait que le noyau (6) a un bord extérieur rabattu et que la distance axiale entre les billes (9, 9') et le disque (2) est telle que le bord extérieur du noyau monté soit serré contre la butée (11) formée par le pourtour extérieur du disque.

EP 0 250 898 B1

FIG. 1

FIG. 2

4